# EUROPEAN PATENT APPLICATION

(11) **EP 4 142 358 A1**
(43) Date of publication of application: **01.03.2023**
(21) Application number: 21793759.8
(22) Date of filing: 20.04.2021
(51) Int. Cl.: H04W 28/08, H04W 36/22

(54) **DATA PROCESSING METHOD BASED ON BASE STATION GROUP, AND BASE STATION, BASE STATION SYSTEM, AND COMPUTER-READABLE MEDIUM**

(30) Priority: 24.04.2020 CN 202010333972
(71) Applicant: ZTE Corporation, Shenzhen, Guangdong 518057 (CN)
(72) Inventor: ZHAO, Liang, Shenzhen, Guangdong 518057 (CN); LIN, Lijian, Shenzhen, Guangdong 518057 (CN); DU, Yongsheng, Shenzhen, Guangdong 518057 (CN)
(74) Representative: Ricker, Mathias
(86) International application number: PCT/CN2021/088317
(87) International publication number: WO 2021/213365

(57) **Abstract**

Provided is a base station group-based data processing method. The method includes: determining a task transfer scheme for a triggered task, where the task transfer scheme includes at least one processing task; determining a target base station allocated for each processing task of the at least one processing task; sending each processing task to the allocated target base station; receiving a processing result of each processing task fed back by the target base station; and obtaining a processing result of the triggered task according to the processing result of each processing task. Further provided are a base station, a base station system, and a computer-readable medium.

## Description

### TECHNICAL FIELD

The present disclosure relates to the field of data processing, for example, a base station group-based data processing method, a base station, a base station system, and a computer-readable medium.

### BACKGROUND

With the development of the 5th-generation mobile communication technology (5G), a base station has increasingly improved functions and can undertake more and more tasks. In the related art, during data processing, a base station generally needs to transmit a large volume of data over a long distance in the absence of a short-range edge cloud, which causes a large number of resources of the base station to be occupied and a relatively high delay. This problem cannot be solved by the architecture of a base station group in the related art.

### SUMMARY

The present disclosure provides a base station group-based data processing method, a base station, a base station system, and a computer-readable medium.

A base station group-based data processing method is provided. The method includes: determining a task transfer scheme for a triggered task, where the task transfer scheme includes at least one processing task; determining a target base station allocated for each processing task of the at least one processing task; sending each processing task to the allocated target base station; receiving a processing result of each processing task fed back by the target base station; and obtaining a processing result of the triggered task according to the processing result of each processing task.

A base station group-based data processing method is further provided. The method includes: receiving a processing task; performing local task processing according to the processing task to obtain a processing result of the processing task; and feeding the processing result back to a master base station so that the master base station obtains a processing result of a triggered task according to the processing result.

A base station is further provided. The base station includes one or more processors and a first storage device configured to store one or more first programs, where the one or more first programs, when executed by the one or more processors, cause the one or more processors to perform the preceding first base station group-based data processing method provided by the present disclosure.

Abase station is further provided. The base station includes one or more processors and a second storage device configured to store one or more second programs, where the one or more second programs, when executed by the one or more processors, cause the one or more processors to perform the preceding second base station group-based data processing method provided by the present disclosure.

A base station system is further provided. The base station system includes the preceding first base station provided by the present disclosure and the preceding second base station provided by the present disclosure.

A computer-readable medium is further provided. The computer-readable medium is configured to store a computer program which, when executed by a processor, causes the processor to perform the preceding first method and the preceding second method provided by the present disclosure.

### BRIEF DESCRIPTION OF DRAWINGS

FIG. 1 is a structural diagram of a base station group involved in the present disclosure;
FIG. 2 is a flowchart of a base station group-based data processing method according to an embodiment of the present disclosure;
FIG. 3 is a flowchart of another base station group-based data processing method according to an embodiment of the present disclosure;
FIG. 4 is a flowchart of another base station group-based data processing method according to an embodiment of the present disclosure;
FIG. 5 is a flowchart of another base station group-based data processing method according to an embodiment of the present disclosure;
FIG. 6 is a flowchart of another base station group-based data processing method according to an embodiment of the present disclosure;
FIG. 7 is a flowchart of another base station group-based data processing method according to an embodiment of the present disclosure;
FIG. 8 is a flowchart of another base station group-based data processing method according to an embodiment of the present disclosure;
FIG. 9 is a flowchart of another base station group-based data processing method according to an embodiment of the present disclosure;
FIG. 10 is a flowchart of another base station group-based data processing method according to an embodiment of the present disclosure;
FIG. 11 is a structural diagram of a base station according to an embodiment of the present disclosure;
FIG. 12 is a structural diagram of another base station according to an embodiment of the present disclosure; and
FIG. 13 is a structural diagram of a base station system according to an embodiment of the present disclosure.

### DETAILED DESCRIPTION

A base station group-based data processing method, a base station, a base station system, and a computer-readable medium provided by the present disclosure are described below in conjunction with drawings.

Example embodiments are described hereinafter with reference to the drawings, but the example embodiments may be embodied in different forms and are not to be construed as limited to the embodiments set forth herein.

Terms used herein are used for describing particular embodiments and are not intended to limit the present disclosure. As used herein, a singular form "one" and "the" is intended to include a plural form, unless otherwise specified in the context. The terms "include" and/or "made of" used in the specification specify the existence of the feature, entity, step, operation, element, and/or component, without excluding the existence or addition of one or more other features, entities, steps, operations, elements, components, and/or combinations thereof.

Although terms such as first and second may be used herein to describe elements/instructions/requests, these elements/instructions/requests are not limited to the terms. These terms are only used for distinguishing one element/instruction/request from another element/instruction/request.

Unless otherwise defined, all the terms (including technical and scientific terms) used herein have the same meanings as those commonly understood. Terms, such as those defined in commonly used dictionaries, are to be interpreted as having meanings consistent with their meanings in the context of the related art and the present disclosure and are not to be interpreted in an idealized or overly formal sense unless expressly so defined herein.

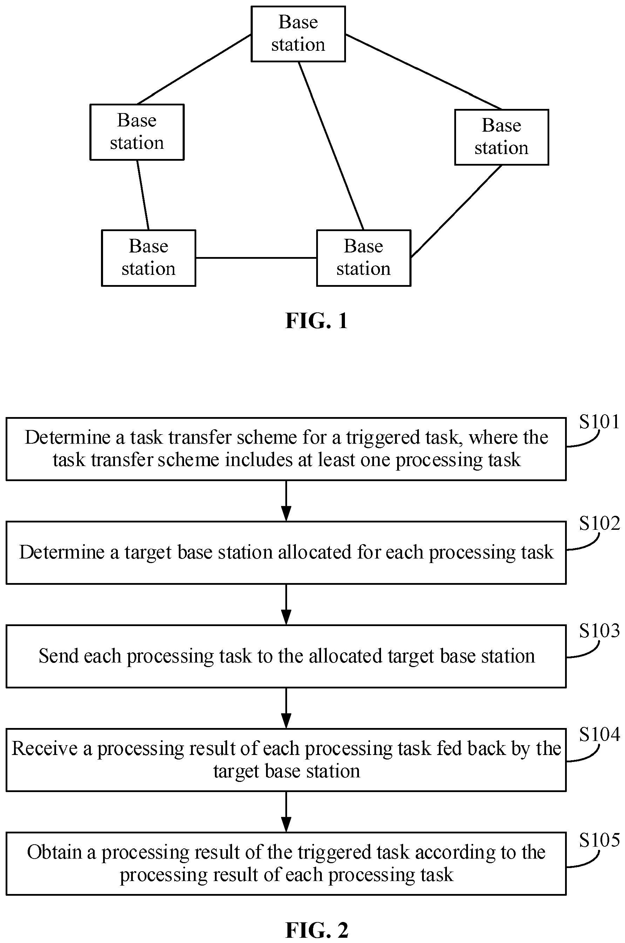

The base station group-based data processing method provided by the present disclosure is implemented based on a base station group, for example, a geographical base station group. The word geographical refers to a base station group capable of directly or indirectly establishing communication connections rather than an absolute geographical distance. The number of base stations in the base station group is not absolute and may be hundreds or thousands. Compared with a farther edge cloud, the base station group performs data transmissions with a smaller overhead and a shorter delay. FIG. 1 is a structural diagram of a base station group involved in the present disclosure. Base stations in the base station group may communicate with each other and have respective computing power resources and storage spaces. The base station group-based data processing method provided by the present disclosure can implement the transfer computing and crowd computing of real-time computation tasks and non-real-time tasks by utilizing resources and communication connections of base stations themselves, thereby improving data processing efficiency.

FIG. 2 is a flowchart of a base station group-based data processing method according to an embodiment of the present disclosure. The method is executed by a single base station in a base station group. In the present disclosure, when a base station initiates a data processing process, the base station is referred to as a master base station. In the embodiment of the present disclosure, the method is executed by the master base station. As shown in FIG. 2, the method includes the steps described below.

In step S101, a task transfer scheme is determined for a triggered task, where the task transfer scheme includes at least one processing task.

The triggered task refers to a task to be currently processed by the master base station. The triggered task includes a real-time computation task with a high priority and a non-real-time computation task with a low priority. The master base station analyzes the triggered task to determine the nature of the triggered task (whether the triggered task is decomposable and whether multiple iterative computations are required) and a resource required for processing the triggered task and compares the resource required for processing the triggered task with a current idle resource of the master base station to determine the task transfer scheme for the triggered task. The task transfer scheme is to include task information, task data, and the like, where the task information includes information such as a complete target or a partial target of the task, a computing network structure used for task computations, and multiple hyperparameters used for the task computations. The task transfer scheme is to include the at least one processing task, where the processing task may be the triggered task or a subtask into which the triggered task is decomposed.

In step S102, a target base station allocated for each processing task is determined.

After the task transfer scheme is determined, the master base station selects an appropriate target base station for the processing task to perform a subsequent data processing process. The target base station is a base station in the base station group. The target base station may be selected from a base station status pool maintained by the master base station or may be selected from nearby base stations in an instant broadcast manner, or the like. A selection manner of the target base station is not limited in the embodiment.

In step S103, each processing task is sent to the allocated target base station.

In step S104, a processing result of each processing task fed back by the target base station is received.

In step S105, a processing result of the triggered task is obtained according to the processing result of each processing task.

After finishing processing the processing task, the target base station feeds the processing result back to the master base station, and the master base station arranges the processing result to obtain the processing result of the triggered task. In an embodiment, an arrangement process needs to be implemented based on the task transfer scheme. For example, when the task transfer scheme is to divide the triggered task, the arrangement process is to correspondingly combine processing results fed back by multiple target base stations to obtain the processing result of the triggered task. When the task transfer scheme is to transfer the triggered task (not divided) as a whole, the arrangement process is to use the processing result fed back by the target base station as the processing result of the triggered task.

According to the base station group-based data processing method provided in the embodiment of the present disclosure, when a base station in the base station group cannot independently complete a data processing task based on its own resource, the task is transferred to another base station in the base station group through determination of the task transfer scheme so as to perform data processing by utilizing a resource of another base station in the base station group, thereby implementing flexible transfer computing or crowd computing of the data processing in the base station group, reducing an overhead for the transmission of a large volume of data between a center server and an edge server over a long distance, and reducing a task computation delay and improving data processing efficiency.

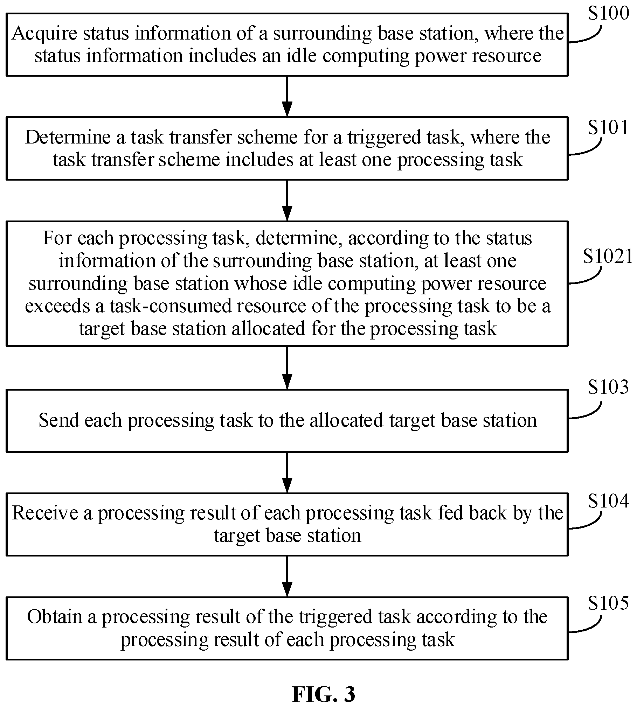

FIG. 3 is a flowchart of another base station group-based data processing method according to an embodiment of the present disclosure. As shown in FIG. 3, in addition to steps S101 to S105 of the method shown in FIG. 2, the method further includes step S100 before step S101.

In step S100, status information of a surrounding base station is acquired, where the status information includes an idle computing power resource.

A "surrounding base station" of a base station refers to a base station within a preset distance range of the base station or a certain number of base stations in the surroundings of the base station (for example, a certain number of base stations closest to the base station). The status information of a base station includes the idle computing power resource, which is a computation-available space and/or an ability of a central processing unit/graphics processing unit (CPU/GPU). Additionally, the status information of the base station may also include information such as the size of a currently available storage space of the base station, position information of the base station, identification information of the base station, and a working status of the base station.

Accordingly, in the embodiment, step S102 includes step S1021.

In step S1021, for each processing task, at least one surrounding base station whose idle computing power resource exceeds a task-consumed resource of the processing task is determined, according to the status information, to be a target base station allocated for the processing task.

The master base station selects, according to the task-consumed resource required by each processing task, at least one base station whose idle computing power resource exceeds the task-consumed resource of the processing task from at least one surrounding base station recorded in a base station status pool as the target base station for processing the processing task.

In practical application, some processing tasks have a one-to-one correspondence with target base stations. For example, each processing task is an independent task. However, some processing tasks have a one-to-many correspondence with base stations. For example, one processing task needs to be processed by multiple target base stations in cooperation.

As an optional manner of step S 100, a process of acquiring the status information of the surrounding base station may be periodically acquiring the status information of a surrounding base station recorded in the base station status pool. Each base station in a base station group maintains one base station status pool itself, where the base station status pool stores status information of a surrounding base station (where the "surrounding base station" refers to a base station within a preset distance range of each base station or a certain number of base stations in the surroundings of each base station, for example, the certain number of base stations closest to each base station) of each base station. The base station collects and updates the status information of the surrounding base station stored in the base station status pool at preset intervals.

As another optional manner of step S 100, the process of acquiring the status information of the surrounding base station may be broadcasting base station status query information in response to a preset trigger condition and receiving the status information fed back by the surrounding base station. When the base station needs to initiate a base station group-based data processing flow, the base station may broadcast the base station status query information to the surroundings based on the preset trigger condition. The base station status query information includes position information of the base station. After receiving the broadcast, the surrounding base station within the preset distance range automatically feeds back its own status information. The preset trigger condition may be set according to an actual situation. For example, the trigger condition may be that the base station receives the triggered task.

In practical application, optionally, when the triggered task is a non-real-time task, generally the status information of the surrounding base station recorded in the base station status pool is periodically acquired such that the status information of the surrounding base station is acquired; when the triggered task is a real-time task, generally the status information of the surrounding base station is acquired in a broadcast form, so as to improve the instantaneity of the real-time task.

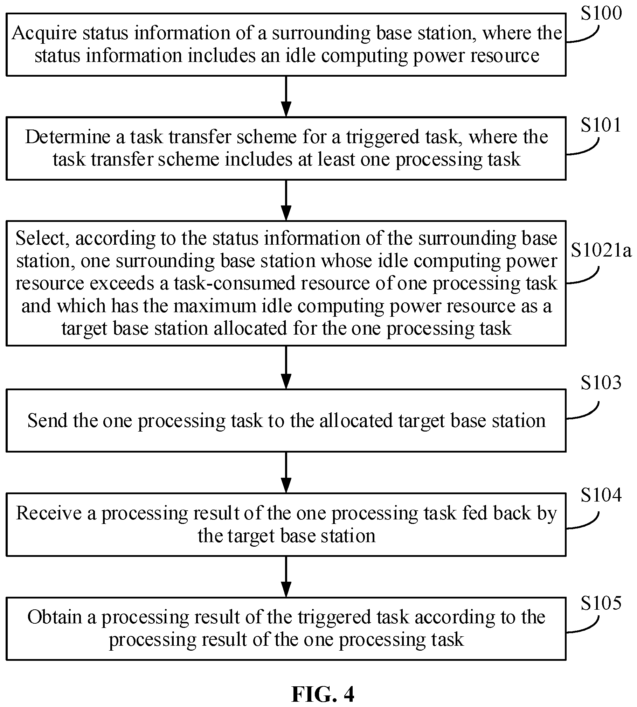

FIG. 4 is a flowchart of another base station group-based data processing method according to an embodiment of the present disclosure. In the embodiment, the task transfer scheme may include one processing task, which is a triggered task. That is, the triggered task is not divided, and a master base station replicates and transfers the triggered task as a whole. In this case, based on the embodiment shown in FIG. 3, step S102 includes step S1021a in the embodiment.

In step S1021a, one surrounding base station whose idle computing power resource exceeds a task-consumed resource of the processing task and which has a maximum idle computing power resource is selected, according to status information of a surrounding base station, as a target base station allocated for the processing task.

That is, when the master base station does not divide the triggered task, the master base station selects one surrounding base station whose idle computing power resource most exceeds the task-consumed resource of the processing task to process the processing task. In this manner, available computing power resources in the base station group can be utilized to the maximum extent, thus improving data processing efficiency.

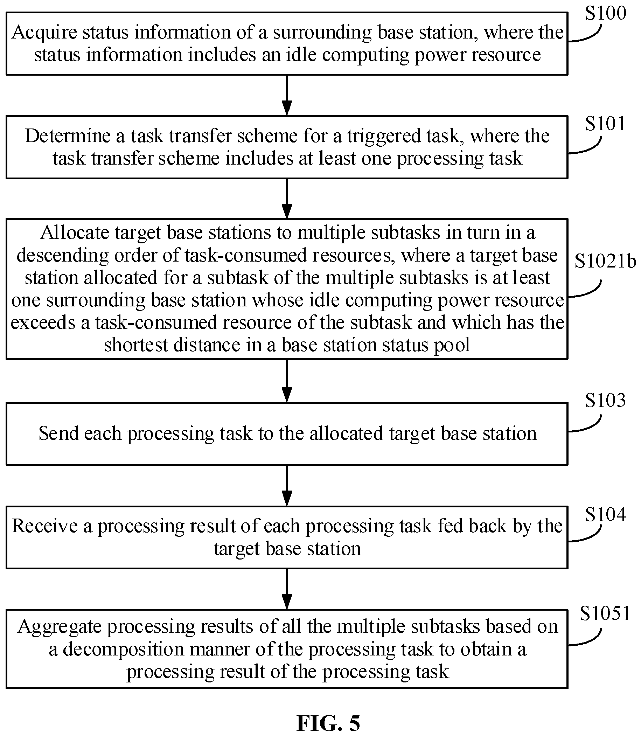

FIG. 5 is a flowchart of another base station group-based data processing method according to an embodiment of the present disclosure. In the embodiment, a task transfer scheme may include multiple processing tasks, each of the multiple processing tasks is an independent subtask into which a triggered task is decomposed. That is, the master base station divides and transfers the triggered task, where "independent subtasks" refer to these subtasks unassociated with each other, that is, an execution order of these subtasks is not limited. In this case, based on the embodiment shown in FIG. 3, step S102 includes step S1021b in the embodiment.

In step S1021b, target base stations are allocated for multiple subtasks in turn in a descending order of task-consumed resources, where a target base station allocated for a subtask is at least one surrounding base station whose idle computing power resource exceeds a task-consumed resource of the subtask and which has the shortest distance.

In the embodiment, if the subtask is a subtask processed by a single base station, the subtask corresponds to one target base station; if the subtask is a subtask processed by multiple base stations (for example, a federated learning subtask), the subtask corresponds to multiple target base stations.

In the embodiment, idle computing power resources in a base station group can be utilized to the maximum extent through the preceding target base station determination manner so that the triggered task of the master base station can be efficiently processed.

With continued reference to FIG. 5, in some embodiments, when the transfer scheme includes the multiple processing tasks, the preceding step S105 includes step S1051.

In step S1051, processing results of all the multiple subtasks are aggregated based on a decomposition manner of the processing tasks so as to obtain a processing result of the processing task.

In an embodiment, the step in which the processing result of the triggered task is obtained according to the processing result of the processing task includes: aggregating the processing results of all the multiple subtasks based on the decomposition manner of the triggered task to obtain the processing result of the processing task.

After receiving the processing results of all the subtasks, the master base station aggregates all the processing results. An aggregation process includes a combination of addition, subtraction, multiplication, division, and complex algorithms. The aggregation process may be implemented based on a division manner of the triggered task and is not limited in the embodiment.

For other steps involved in the embodiments shown in FIGS. 4 and 5 which are the same as those in the embodiment shown in FIG. 3, reference may be made to the description of the embodiment shown in FIG. 3. The details are not repeated here.

Additionally, a limited number of target base station determination manners are shown in the preceding embodiments. In practical application, the target base station may be determined based on another fixed selection strategy and/or dynamic algorithm selection manner.

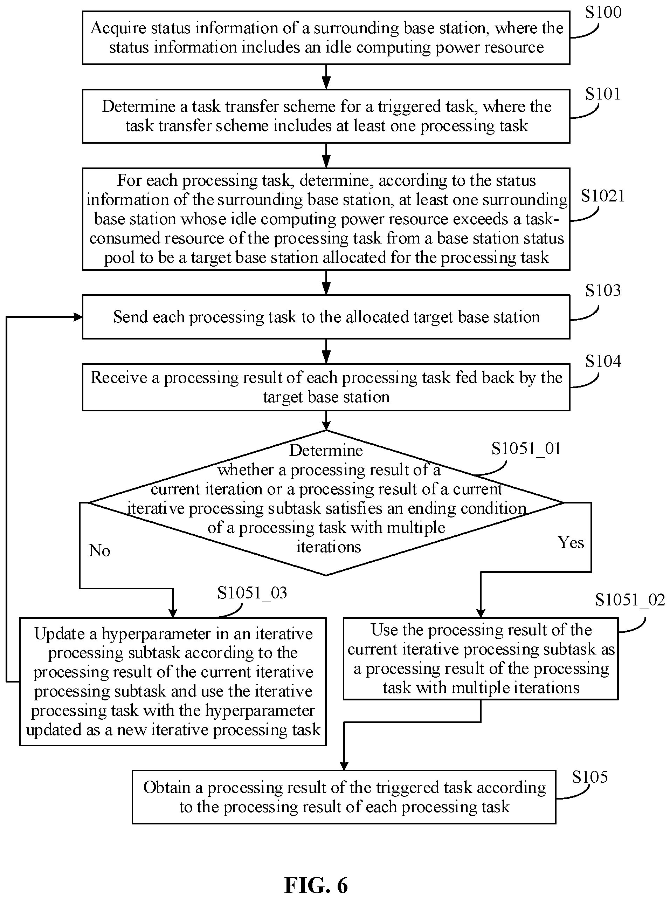

FIG. 6 is a flowchart of another base station group-based data processing method according to an embodiment of the present disclosure. In the embodiment, a processing task is an iterative processing task. That is, in the embodiment, multiple iterations need to be performed for the processing task based on a certain volume of big data so as to obtain a processing result. In practical application, for example, the optimization and computation of an entire recognition model is an iterative processing task. For example, optimization of a frequency domain interference recognition model needs to utilize data in a local frequency domain interference recognition sample database of a base station to complete multiple iterative computations of the task. In the embodiment, after the master base station distributes the processing task to a target base station, the target base station performs multiple iterative computations by using a local database so as to train and update the recognition model by using local data of the target base station. Additionally, in the embodiment, one target base station or multiple target base stations may be allocated, and the number of target base stations may be determined according to the number of sample data required for model training.

Referring to FIG. 6, based on the embodiment shown in FIG. 3, the following steps are further included before step S 105 in the embodiment.

In step S105_01, it is determined whether a processing result of a current iteration satisfies an ending condition of the iterative processing task.

When the processing task is the iterative processing task, each time a single iterative computation is completed, the master base station needs to determine whether the processing result of the current iteration satisfies the ending condition. The ending condition is a condition for ending the iterative processing task. In an embodiment, the ending condition may be that the number of iterations reaches a threshold or may be that an iteration result reaches a convergence condition. The ending condition may be set based on a triggered task and is not limited in the present disclosure.

When it is determined in step S105_01 that the processing result of the current iteration satisfies the ending condition of the iterative processing task, step S105_02 is performed, so as to end the subsequent iterative computation process. When it is determined that the processing result of the current iteration does not satisfy the ending condition of the iterative processing task, step S105_03 is performed, so as to continue the subsequent iterative computation process.

In step S105_02, the processing result of the current iteration is used as a processing result of the iterative processing task.

In step S105_03, a hyperparameter in the iterative processing task is updated according to the processing result of the current iteration, the iterative processing task with the hyperparameter updated is used as a new iterative processing task, and step S 103 is performed.

In the embodiment, when the processing task is the iterative processing task, the iterative processing task may be distributed to an appropriate target base station in the base station group. The iterative processing task is completed by using the local database of the target base station, improving the diversity of sample data and the accuracy of a model trained through the iterative processing task.

When the processing task is the iterative processing task, in practical application, after receiving the iterative processing task sent by the master base station, the target base station automatically determines whether the ending condition (such as the number of iterations or the convergence condition) is satisfied in a process of processing the iterative processing task. When each target base station determines that the iterative processing task satisfies the ending condition, each target base station feeds an iterative processing result of the iterative processing task back to the master base station, and the master base station obtains a final processing result of the iterative processing task according to iterative processing results fed back by most target base stations.

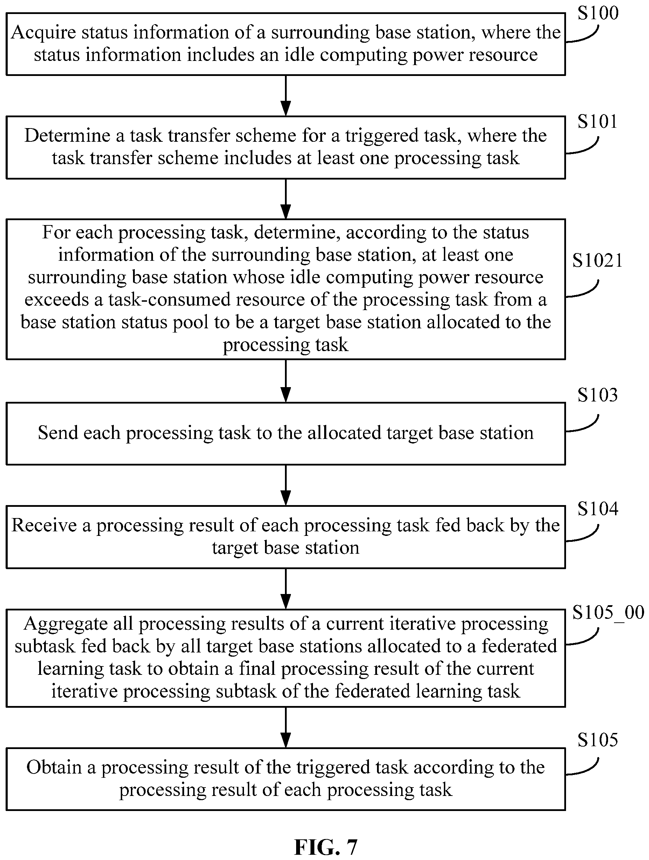

FIG. 7 shows another base station group-based data processing method according to an embodiment of the present disclosure. In the embodiment, a processing task is a federated learning task. Federated learning defines a machine learning framework, under the framework, a virtual model is designed to solve the problem of the cooperation of different data owners without data exchanges. The virtual model is an optimal model in which multiple parties aggregate data, and multiple regions serve a local target based on the model. That is, in the embodiment, the federated learning task needs to perform a data processing process based on data of multiple base stations. In this case, the processing task corresponds to multiple target base stations.

Accordingly, referring to FIG. 7, based on the embodiment shown in FIG. 3, step S105_00 is further included before step S 105 in the embodiment.

In step S105_00, processing results fed back by all the multiple target base stations allocated for the federated learning task are aggregated so as to obtain a final processing result of the federated learning task.

In the embodiment, when the processing task is the federated learning task, the master base station aggregates the received processing results fed back by the multiple target base stations to obtain the final processing result of the processing task. After obtaining the final processing result of the federated learning task, the master base station performs step S105, that is, obtains the processing result of the triggered task according to the processing results of multiple processing tasks.

In practical application, when the target base stations process the federated learning task, the federated learning task itself is iterative processing. In a process of each iteration, the target base station determines whether the iteration satisfies the ending condition (for example, a convergence condition). When it is determined that the iteration satisfies the ending condition, a processing result is fed back to the master base station, and the processing result is labelled that the ending condition is satisfied. When it is determined that the ending condition is not satisfied, a processing result is also fed back to the master base station, and the processing result is labelled that the ending condition is not satisfied. The master base station determines whether there are a preset number (such as 50% or 80%) of processing results which satisfy the ending condition among the processing results fed back by all the target base stations in the iteration. When it is determined that there are no preset number of processing results which satisfy the ending condition among the processing results fed back by all the target base stations in the iteration, the target base stations are notified to enter the next iteration. When it is determined that there are the preset number of processing results which satisfy the ending condition among the processing results fed back by all the target base stations in the iteration, all the processing results are aggregated, so as to obtain the final processing result of the federated learning task.

Multiple scenarios of the processing task involved in the preceding embodiments of the present disclosure may be combined. For example, the triggered task may include multiple processing tasks, where part of the processing tasks may be iterative processing tasks, part of the processing tasks may be federated learning tasks, part of the processing tasks may be both iterative processing tasks and federated learning tasks, and so on. In this case, the corresponding data processing method includes corresponding implementation steps in the preceding embodiments. Combinations of the scenarios are within the scope of the present disclosure and the details are not repeated here.

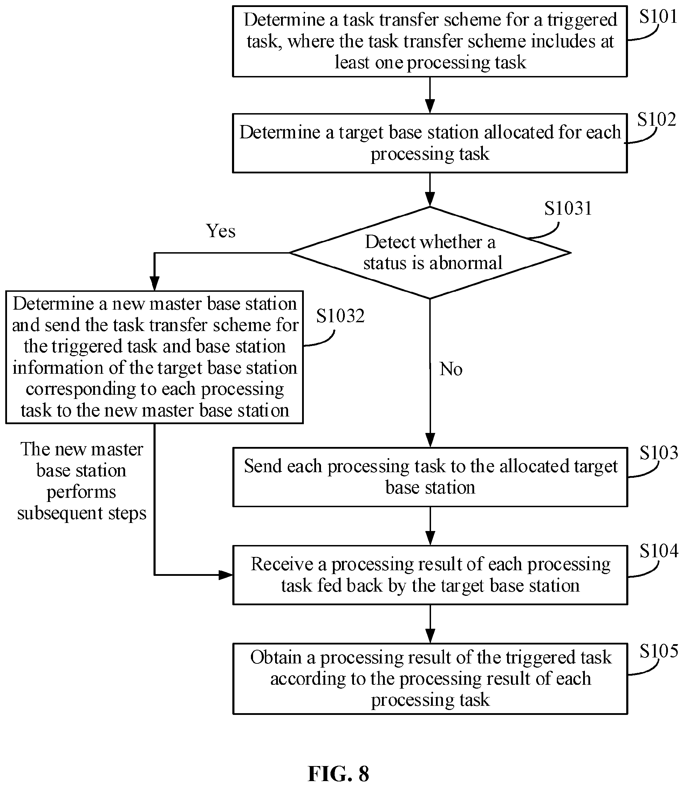

FIG. 8 shows another base station group-based data processing method according to an embodiment of the present disclosure. As shown in FIG. 8, based on the embodiment shown in FIG. 2, the method further includes the following step before step S103.

In step S1031, it is detected whether a status is abnormal.

In response to detecting that the status is abnormal, step S1032 is performed. In response to detecting that the status is normal, step S103 is performed.

In step S1032, a new master base station is determined, and a task transfer scheme for a triggered task and base station information of a target base station corresponding to a processing task are sent to the new master base station.

In the embodiment, before sending the processing task to the allocated target base station, a master base station detects the status of the master base station. If it is detected that the status of the master base station is abnormal, another base station is selected from a base station group as the new master base station, and the task transfer scheme for the triggered task and the base station information of the target base station for processing the triggered task are sent to the new master base station so that the new master base station takes over the task of the original master base station and smoothly performs the subsequent data processing process. The status of the master base station includes a status of a signal, a status of a computing power resource, a status of a storage resource, and the like.

In the embodiment, a method for the master base station to determine the new master base station includes selecting an appropriate base station from a base station status pool of the master base station as the new master base station or selecting an appropriate base station from other base stations in the base station group as the new master base station according to base station status feedback information fed back by the other base stations in the base station group, as described above in the present disclosure. Another selection manner with a fixed strategy or with a dynamic algorithm is also applicable.

In the embodiment, before transfer computing or crowd computing, the master base station detects the status of the master base station and selects the new master base station when the status is abnormal, where the new master base station takes over the task of the master base station. In this manner, a smooth data processing process can be further ensured and data processing efficiency can be improved.

In the embodiment, steps S1031 and S1032 may be implemented based on any one of the preceding embodiments. FIG. 8 shows merely one implementation scenario and is not to limit the present disclosure.

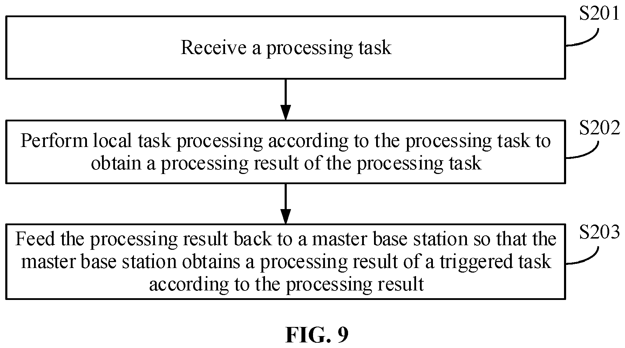

FIG. 9 is a flowchart of another base station group-based data processing method according to an embodiment of the present disclosure. The embodiment differs from the preceding embodiments in that the method is performed by the target base station mentioned above. As shown in FIG. 9, the method includes the steps described below.

In step S201, a processing task is received.

In step S202, local task processing is performed according to the processing task so as to obtain a processing result of the processing task.

In step S203, the processing result is fed back to a master base station so that the master base station obtains a processing result of a triggered task according to the processing result.

The embodiment corresponds to multiple steps in the embodiment shown in FIG. 2, and reference may be made to the description of the corresponding steps in the embodiment shown in FIG. 2. The details are not repeated here.

According to the base station group-based data processing method provided in the embodiment of the present disclosure, when a base station in a base station group cannot independently complete a data processing task based on its own resource, a task transfer scheme is determined and the task is transferred to another base station (the target base station) in the base station group so as to perform data processing by utilizing a resource of the target base station, implementing flexible transfer computing or crowd computing of the data processing in the base station group, reducing an overhead for the transmission of a large volume of data between a center server and an edge server over a long distance, and reducing a task computation delay and improving data processing efficiency.

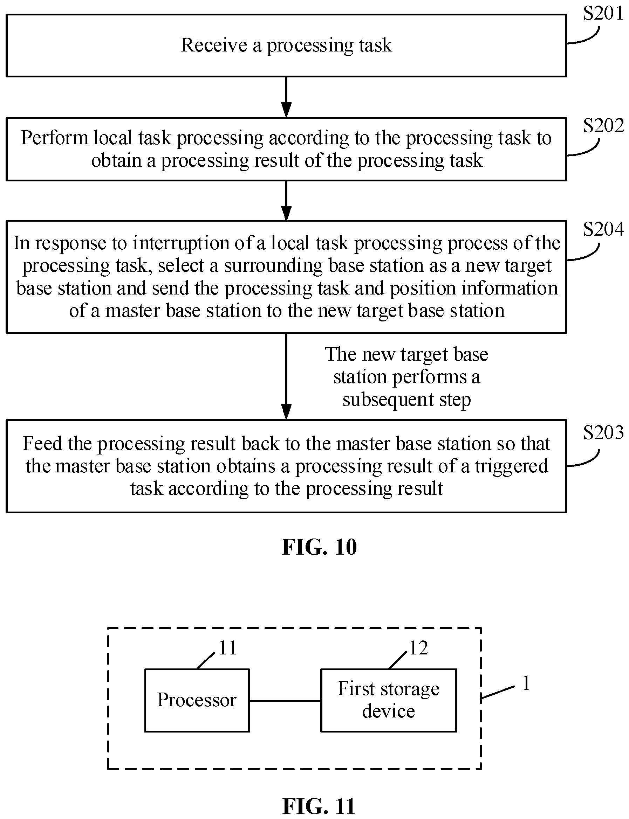

FIG. 10 is a flowchart of another base station group-based data processing method according to an embodiment of the present disclosure. The embodiment differs from the embodiment shown in FIG. 9 in that in addition to steps S201 to S203, the method further includes step S204.

In step S204, in response to interruption of a local task processing process of the processing task, a surrounding base station is selected as a new target base station and the processing task and position information of the master base station are sent to the new target base station.

In the embodiment, when a target base station processes the processing task, in response to the interruption of the task processing process, the target base station may select a base station from a base station status pool of the target base station as the new target base station and send the processing task and the position information of the master base station to the new target base station. After receiving the processing task and the position information of the master base station, the new target base station can continue to process the processing task and feed a processing result back to the master base station according to the position information of the master base station after the processing is completed.

In the embodiment, in the task processing process, in response to the interruption of task processing, the target base station can select a next-level target base station as a relay so that it can be ensured that the processing task is smoothly performed, thereby improving data processing efficiency.

In the embodiment of the present disclosure, an execution sequence of step S204 may be triggered in any one of steps S202 and S203, that is, the execution of step S204 may be triggered in response to a failure in the process of the target base station processing the processing task, or the execution of step S204 may be triggered in response to a failure of the target base station to feed the processing result back to the master base station. FIG. 10 shows merely one execution sequence of step S204, which is not to limit the present disclosure.

Embodiments of the present disclosure further provide a base station. FIG. 11 is a structural diagram of a base station according to an embodiment of the present disclosure. As shown in FIG. 11, a base station 1 includes one or more processors 11 and a first storage device 12, where the first storage device 12 is configured to store one or more first programs, and the one or more first programs, when executed by the one or more processors 11, cause the one or more processors 11 to perform the methods shown in FIGS. 2 to 8.

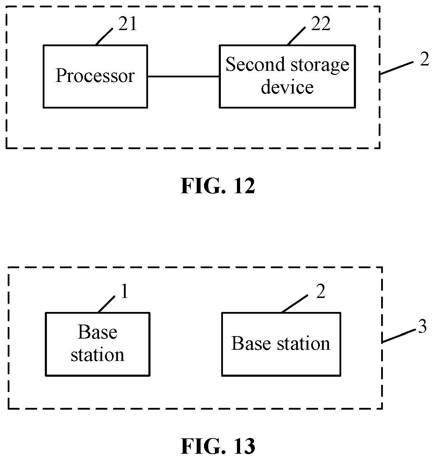

Embodiments of the present disclosure further provide another base station. FIG. 12 is a structural diagram of another base station according to an embodiment of the present disclosure. As shown in FIG. 12, a base station 2 includes one or more processors 21 and a second storage device 22, where the second storage device 22 is configured to store one or more second programs, and the one or more second programs, when executed by the one or more processors 21, cause the one or more processors 21 to perform the methods shown in FIGS. 9 and 10.

Embodiments of the present disclosure further provide a base station system. FIG. 13 is a structural diagram of a base station system according to an embodiment of the present disclosure. As shown in FIG. 13, as an optional scheme, the base station system is a base station group, where the base station group includes at least one base station 1 shown in FIG. 11 and a base station 2 shown in FIG. 12. The base station 1 and the base station 2 are two different base stations in the base station group. As another optional scheme, the base station system may be a base station in the base station group and is integrated with the base station 1 shown in FIG. 11 and the base station 2 shown in FIG. 12 in the present disclosure.

The present disclosure further provides a computer-readable medium, which is configured to store a computer program which, when executed by a processor, causes the processor to perform the base station group-based data processing methods provided in the preceding embodiments of the present disclosure.

Some or all steps of the preceding method and function modules/units in the preceding system or apparatus may be implemented as software, firmware, hardware, and suitable combinations thereof. In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). The computer storage media include volatile and nonvolatile media and removable and non-removable media implemented in any method or technology for storing information (such as computer-readable instructions, data structures, program modules, or other data). The computer storage media include a random-access memory (RAM), a read-only memory (ROM), an electrically erasable programmable read-only memory (EEPROM), a flash memory or other memory technologies, a compact disc read-only memory (CD-ROM), a digital video disk (DVD) or other optical storages, a magnetic cassette, a magnetic tape, a magnetic disk or other magnetic storage devices, or any other medium that can be used for storing desired information and that can be accessed by a computer. The communication media generally include computer-readable instructions, data structures, program modules, or other data in carriers or in modulated data signals transported in other transport mechanisms and may include any information delivery medium.

Example embodiments have been disclosed herein. Although relevant terms are used, these terms are used only and should only be construed in a generic and illustrative sense and are not intended to be limiting. In some instances, unless otherwise indicated, features, characteristics, and/or elements described in conjunction with particular embodiments may be used alone or may be used in combination with features, characteristics, and/or elements described in conjunction with other embodiments. Accordingly, various changes in form and detail may be made without departing from the scope of the present disclosure as stated in the appended claims.

## Claims

1. A base station group-based data processing method, comprising:
determining a task transfer scheme for a triggered task, wherein the task transfer scheme comprises at least one processing task;
determining a target base station allocated for each processing task of the at least one processing task;
sending the each processing task to the allocated target base station;
receiving a processing result of the each processing task fed back by the target base station; and
obtaining a processing result of the triggered task according to the processing result of the each processing task.

2. The method of claim 1, before determining the task transfer scheme for the triggered task, further comprising:
acquiring status information of a surrounding base station, wherein the status information comprises an idle computing power resource;
wherein determining the target base station allocated for each processing task of the at least one processing task comprises:
for the each processing task, determining, according to the status information, at least one surrounding base station whose idle computing power resource exceeds a task-consumed resource of the each processing task to be the target base station allocated for the each processing task.

3. The method of claim 2, wherein acquiring the status information of the surrounding base station comprises:
periodically acquiring the status information of the surrounding base station recorded in a base station status pool; or
broadcasting base station status query information in response to a preset trigger condition and receiving the status information fed back by the surrounding base station.

4. The method of claim 2, wherein the task transfer scheme comprises one processing task, and the one processing task is the triggered task;
wherein determining, according to the status information, the at least one surrounding base station whose idle computing power resource exceeds the task-consumed resource of the each processing task to be the target base station allocated for the each processing task comprises:
selecting, according to the status information, one surrounding base station whose idle computing power resource exceeds a task-consumed resource of the one processing task and which has a maximum idle computing power resource as the target base station allocated for the one processing task.

5. The method of claim 2, wherein the task transfer scheme comprises a plurality of processing tasks, and each of the plurality of processing tasks is an independent subtask into which the triggered task is decomposed;
wherein for the each processing task, determining, according to the status information, the at least one surrounding base station whose idle computing power resource exceeds the task-consumed resource of the each processing task to be the target base station allocated for the each processing task comprises:
allocating target base stations to a plurality of subtasks in turn in a descending order of task-consumed resources, wherein a target base station allocated for a subtask of the plurality of subtasks is at least one surrounding base station whose idle computing power resource exceeds a task-consumed resource of the subtask and which has a shortest distance.

6. The method of claim 5, wherein obtaining the processing result of the triggered task according to the processing result of the each processing task comprises:
aggregating processing results of all the plurality of subtasks based on a decomposition manner of the triggered task to obtain the processing result of the processing task.

7. The method of claim 2, wherein a processing task of the at least one processing task is an iterative processing task;
wherein before obtaining the processing result of the triggered task according to the processing result of the each processing task, the method further comprises:
determining whether a processing result of a current iteration satisfies an ending condition of the iterative processing task;
in response to determining that the processing result of the current iteration satisfies the ending condition of the iterative processing task, using the processing result of the current iteration as a processing result of the iterative processing task; and
in response to determining that the processing result of the current iteration does not satisfy the ending condition of the iterative processing task, updating a hyperparameter in the iterative processing task according to the processing result of the current iteration and resending the iterative processing task with the updated hyperparameter to the allocated target base station.

8. The method of claim 2, wherein a processing task of the at least one processing task is a federated learning task, and a plurality of target base stations are allocated;
wherein before obtaining the processing result of the triggered task according to the processing result of the each processing task, the method further comprises:
aggregating processing results fed back by all the plurality of target base stations allocated for the federated learning task to obtain a final processing result of the federated learning task.

9. The method of any one of claims 1 to 8, before sending the each processing task to the allocated target base station, further comprising:
detecting whether a status of a master base station is abnormal;
in response to detecting that the status is abnormal, determining a new master base station and sending the task transfer scheme for the triggered task and base station information of the target base station corresponding to the each processing task to the new master base station; and
in response to detecting that the status is normal, sending the each processing task to the allocated target base station.

10. A base station group-based data processing method, comprising:
receiving a processing task;
performing local task processing according to the processing task to obtain a processing result of the processing task; and
feeding the processing result back to a master base station so that the master base station obtains a processing result of a triggered task according to the processing result.

11. The method of claim 10, further comprising:
in response to interruption of a local task processing process of the processing task, selecting a surrounding base station as a new target base station and sending the processing task and position information of the master base station to the new target base station.

12. A base station, comprising:
one or more processors; and
a storage device configured to store one or more programs, wherein the one or more programs, when executed by the one or more processors, cause the one or more processors to perform the base station group-based data processing method of any one of claims 1 to 9.

13. A base station, comprising:
one or more processors; and
a storage device configured to store one or more programs, wherein the one or more programs, when executed by the one or more processors, cause the one or more processors to perform the base station group-based data processing method of claim 10 or 11.

14. A base station system, comprising the base station of claim 12 and the base station of claim 13.

15. A computer-readable medium, which is configured to store a computer program which, when executed by a processor, causes the processor to perform the base station group-based data processing method of any one of claims 1 to 11.
